## Europäisches Patentamt
## European Patent Office
## Office européen des brevets

(11) Publication number: **0 072 044**
**B1**

(12) **EUROPEAN PATENT SPECIFICATION**

(45) Date of publication of patent specification: **21.10.87**

(51) Int. Cl.⁴: **G 01 F 1/68**

(21) Application number: **82200829.8**

(22) Date of filing: **02.07.82**

(54) **Cell apparatus for metering liquid flow in the range of less than 10 ml/minute.**

(30) Priority: **06.07.81 US 280400**
**06.07.81 US 280668**

(43) Date of publication of application:
**16.02.83 Bulletin 83/07**

(45) Publication of the grant of the patent:
**21.10.87 Bulletin 87/43**

(84) Designated Contracting States:
**DE FR GB IT NL**

(56) References cited:
**GB-A-1 095 476**
**US-A-2 776 565**
**US-A-2 813 237**
**US-A-4 228 683**

(73) Proprietor: **THE DOW CHEMICAL COMPANY**
**2030 Dow Center Abbott Road P.O. Box 1967**
**Midland, MI 48640 (US)**

(72) Inventor: **Miller, Theodore Edward, Jr.**
**5202 Plainfield**
**Midland Michigan 48640 (US)**
Inventor: **Small, Hamish**
**3810 Moorland**
**Midland Michigan 48640 (US)**

(74) Representative: **Urbanus, Henricus Maria, Ir.**
**et al**
**c/o Vereenigde Octrooibureaux Nieuwe**
**Parklaan 107**
**NL-2587 BP 's-Gravenhage (NL)**

Courier Press, Leamington Spa, England.

# 0 072 044

## Description

### Field of the invention

The instant invention relates to an apparatus and a flow cell for measuring the flow rate of a liquid. More in particular the invention relates to a non-invasive liquid metering apparatus and a flow cell for measuring the volume flow rate of a liquid with an attainable precision of ±0.1% under typical conditions.

### Prior art

An apparatus for measuring the flow rate of a liquid comprising: a body defining a flow-through passageway for conveying the liquid to be measured therethrough; a resistance heating means operably positioned in said passageway and having a heat emitting surface disposed within the liquid in said flow-through passageway for imparting sequential heat pulses to the liquid flowing in said passageway; a heat sensing means operably positioned in said passageway downstream from the resistance heating means and having a heat sensing surface disposed within said flow-through passageway in a fixed spaced relationship with the heat emitting surface of said heating means; and means for electronically detecting the period of time between sequential heat pulses, is known from US patent 4,228,683.

As the heated zone is conveyed the length of the flow-through passageway, heat transfer disperses the warmed zone axially so that the thermal pulse unavoidably encounters the sensor position downstream from the heating means as a gradual rather than a step temperature change. The above prior art which substantially relies on a differential thermo couple element as a "downstream" heat sensor, fails short to operate satisfactorily within an environment wherein each temperature pulse is no more than 1°C and which may be superimposed upon a gradual temperature drift of ±5°C. Inaccuracies are induced in the measuring results due to such drift and due to failure to lock reliably into step with the in situ temperature pulse. Moreover the range of flow rates which can be reliably measured with this prior art is limited to a range from 20—100 ml/min.

A further type of thermal flow meter adapted to measure the rate of liquid flow is known from US patent 2,813,237. This prior art apparatus comprises a flow cell through which the fluid under measurement is directed. This cell includes an electrical heating element to supply a predetermined quantity of heat to the flowing fluid. A first temperature sensitive resistance element, more in particular a thermistor, is positioned in the flow path downstream from the region of heat addition, while a second thermistor is positioned in the flow path upstream from the region of heat addition. These two thermistors are connected in an electrical bridge circuit which provides an indication of a temperature differential therebetween. The temperature of the flowing fluid in the region of said first thermistor is a function of the rate of flow, whereby measurement of the temperature of the fluid at this region provides an indication of the flow rate. The second thermistor is utilized as a means of compensating in the apparatus for changes in ambient temperature of the fluid under measurement and provides a reference for measurement of the temperature reference. This prior art is based on the thermal dilution principle which exploits the proportionality between flow and the extent of cooling of an immersed, self heating probe to detect flow rate. The principle obstacle to precise flow metering on such a basis is the sizable influence of the fluid specific heat on the result; compositional changes severely affect the measurement.

US patent 3,781,839 discloses a thermistor sensor which is particularly adapted for disposition in thermal communication with a fluid medium utilized for effecting cooling of equipment. The thermistor sensor senses variations in the heat transfer characteristics of the medium, and is coupled to a power supply through a resistor, which cooperates with the thermistor sensor to define a voltage divider, including a junction. This prior art is also inappropriate for volumetrically metering liquid flow rates with a high position and also in a range of less than 10 ml/min.

### Summary of the invention

In order to determine molecular weight or size distribution of separated particles in GPC (Gel permeation chromatography) and HDC (hydrodynamic chromatography), peak composition is inferred from its elution volume. Elution volume has been determined in chromatography by measuring the transit time of an unretarded marker species to which the detector is sensitive and relating solute position to marker position. However, this technique and prior art of the afore-mentioned kind are generally not capable of better than 0.3% flow stability over repeated analysis. For this reason, the practice of assuming constant flow and measuring elution time, would frequently result in unacceptable uncertainties in the determination of latex particle diameters as an illustrative example.

Another flow related source of error for concentration sensitive detectors (ultraviolet=UV, infrared=IR, refractive index=RI, conductivity) in liquid chromatography (LC) is the inverse proportionality between peak area and flow rate, e.g., a 0.5% flow decrease produces a 0.5% area increase.

The most troublesome flow fluctuations are those with periods on the order of peak width since these cause individual peak areas to change. Such fluctuations can occur, e.g., with reciprocating piston pumps because check value leakage rates tend to change for subsequent pump strokes, and stroke volumes are typically 50—500 micro-liters (µl).

In general it is an object of the invention to overcome the deficiencies outlined above in view of the prior art in particular the prior art as disclosed in US patent 4,228,683. More in particular it is an object of the

2

subject invention to satisfy the technical need for an improved liquid metering apparatus for accurately determining volumetric liquid flow rates in the 0.1—10 ml/min, range, where metering precision becomes extremely important.

An apparatus for measuring the flow rate of a liquid in accordance of the subject invention is characterized thereby that said resistance heating means comprises a semi-conductor; said heat sensing means comprise a heat sensing semi-conductor; said means for electronically detecting said period of time between sequential heat pulses includes a differentiating circuit for generating an electrical signal which in magnitude is proportional to $dR_t/dt$, wherein $dR_t/dt$ is the rate of change of the resistance of said heat sensing semi-conductor with time; said differentiating circuit being connected to operate a timer circuit, and wherein said timer circuit is activated in response to said electrical signal to apply a sequential electrical current pulse to said heating semiconductor.

Apparatus of the subject invention provides an improved implementation of the thermal pulse time-of-flight technique and is specifically applicable within environments wherein each temperature pulse is relatively small, i.e. for instance no more than 1°C and which temperature pulses may be superimposed upon a gradual temperature drift of for instance ±5°C. The apparatus is capable of effectively rejecting such drift, and reliably locks into step with the in situ temperature pulse. To further improve immunity to ambient temperature changes, an apparatus of the subject invention is further characterized in that said differentiating circuit has its output connected to a further differentiating circuit for generating an electrical signal having a magnitude corresponding to $d^2R_t/dt^2$ which is the second rate of change of the resistance of said semi-conductor with time.

A flow cell as part of apparatus as defined by the subject invention, and comprising a body defining a flow-through passageway for conveying the liquid to be measured therethrough; a resistance heating means operably positioned in said passageway and having a heat emitting surface disposed within the liquid in said flow-through passageway for imparting sequential heat pulses to the liquid flowing in said passageway, and a heat sensing means operably positioned in said passageway downstream from the resistance heating means and having a heat sensing surface disposed within said flow-through passage in a fixed spaced relationship with the heat emitting surface of said heating means, in accordance with the subject invention characterized in that said flow-through passageway has a fixed internal volume within a range of 0.01—0.5 ml, said resistance heating means is a semi-conductor and said heat sensing means is a further semi-conductor, each of said semi-conductors being encapsulated in an electrical insulator.

A preferred embodiment of a flow cell of the subject invention is characterized in that the heat sensing semi-conductor has a time constant in air of less than about 5 seconds; and the resistance heating semi-conductor has a time constant in air of less than about 22 seconds.

With flow metering apparatus and a flow cell of the subject invention an improved technique is provided for high precision volumetric flow rate measurements and convenient flow cell calibration. By electronically time-differentiating the heat sensor output the relatively slow ambient thermal drift is rejected, while response time in preparation for subsequent pulse detection is minimized in a reliable and reproduceable manner. Also by the design of a flow cell of the subject invention the cell is highly independent of temperature and liquid composition variables.

While the invention has been described with regard to applications where actual data is desired to show, as a measure of flow, instantaneous or averaged flow rate or total flow volume with time, the invention can additionally be applied in the form of a control method or instrument, e.g., to regulate a chromatographic or other liquid metering pump, e.g., by continually detecting flow rate and relaying a signal (measure of flow) to the pump to adjust its flow to a metered setting. It is also apparent that while the major expressed technical need is for an improved apparatus and method to meter flow in the range of less than 10 ml/minute, the principles of the invention are extendable to measuring a considerably higher range of flow rates as demonstrated by Example 3 below.

Features and advantages of the invention will be apparant from the detailed description of the invention below, taken with the accompanying drawings wherein:

Figure 1 is an exploded, part cross-sectional view of a preferential flow cell design from metering liquid according to the principles and teachings of this invention;

Figure 2 is a top view showing the cell body of the Figure 1 flow cell;

Figure 3 is a schematic of a preferred electronic circuit for operating the flow cell according to the principles of the invention; and

Figure 4 is a graph associated with the calibration of the flow cell as described in Example 1.

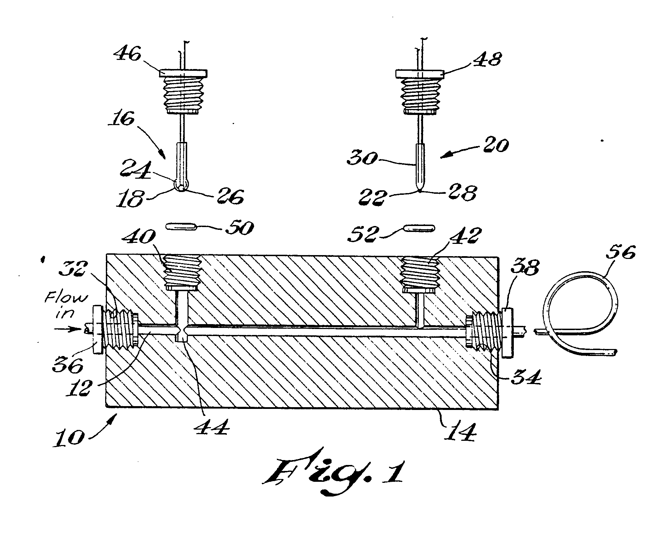

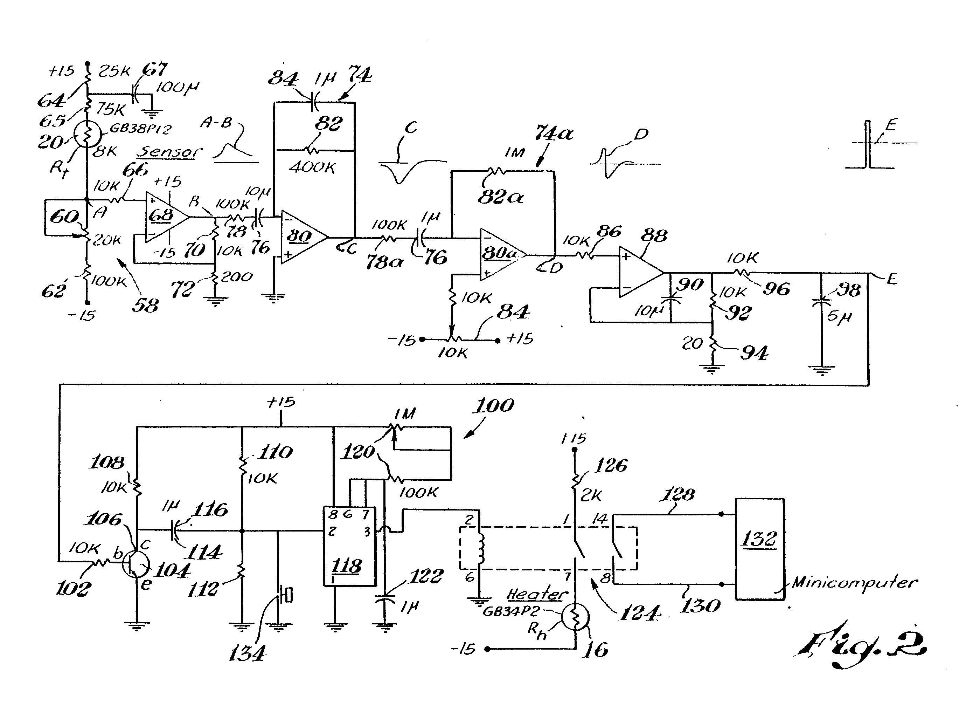

Referring to Figures 1 and 2, a preferred embodiment of the apparatus of the invention is illustrated comprising an electronic flow cell 10 for accurately metering liquid movement (herein meaning the range of flow from 0.1 to 10 ml/min). Flow cell 10 comprises a body 14 having a flow-thorugh passageway 12 through which the liquid to be metered flows. The size or internal volume of the flow cell (calibrated) is fixed and within the range of from 0.01 to 0.5 ml, preferably from 0.01 to 0.25 ml.

A thermistor 16 (or its equivalent as described hereinafter) is mounted in the body 14 to extend into the passageway and which is designed to be used in the self-heating mode to impart sensible heat pulses of short time duration to the liquid to be metered. The self-heating thermistor includes a heat emitting surface 18 which is exposed in the passageway for making direct contact with the flowing liquid to be metered. Preferably, the heat emitting surface is centered in the passageway.

3

Spaced at a fixed distance from the self-heating thermistor is a second thermistor 20 which, in relative terms, is a fast response thermistor, preferably of a smaller mass, designed for use in the heat sensing mode. The heat sensing thermistor includes a heat sensing surface 22 which extends into the flow channel or passageway 12 for making direct contact with the flowing liquid to be metered (downstream from the self-heating thermistor). The heat sensing thermistor is also preferably centered in the passageway.

Preferentially used for the self-heating thermistor is what is referred to as a "standard probe" thermistor, various commercial types of which are known in the art. These standard probe thermistors include a glass bulb or probe 24 which comprises the heat emitting surface of the thermistor. Encased in the glass probe is a semiconductor element 26 which is thus protected and electrically insulated from direct contact with the liquid to be metered. The probe 24 of a preferred thermistor measures 0.254 cm (0.100 inch) in diameter. It can be used to develop a pulse power of approximately 50—150 milliwatts over extended periods of use without apparent deterioration or alteration of its electrical properties. The small thermal mass of the probe indicated by its Time Constant rating (T.C.) in air of between 14—22 seconds is found generally sufficient to permit rapid enough pulsing in a liquid to be suitable for applications in accordance with the invention. Its power output is sufficeint to develop sensible heat pulses in conjunction with the heat sensing capability of thermistor 20.

The heat sensing thermistor 20 is a "fast response" glass probe thermistor and also comprises a semiconductor element 28 encased in glass 30. Thermistor 20, due to a much smaller thermal mass, has a T.C. rating in air of about 5 seconds or less.

The commercial heat sensing thermistors described generally have a 3—4 percent/°C negative temperature coefficient. This range of sensitivity has been found quite suitable for use in the invention. A lesser temperature coefficient for the heat sensing thermistor would be operable so long as a sufficient resistance change is registered to sense the heat pulses in the liquid.

The temperature coefficient of the self-heating thermistor is largely an unimportant parameter since the thermistor is used in a self-heating mode; it being preferred, however, to use a self-heating thermistor with a negative temperature coefficient to minimize possible thermistor damage due to inadvertent excessive heating, e.g., in the event the apparatus is abused or operated improperly. However, either a negative or a positive temperature coefficient thermistor may be used as a heat sensing thermistor.

The invention also contemplates the use of devices which are equivalent to the self-heating thermistor. These would be based on the substitution for thermistor element 16, of a semiconductor based heating element which differs in that it does not possess the temperature coefficient property which characterizes a thermistor element. The term "semi-conductor" is intended to define a material which has a resistivity in the range of from $10^3$ to $10^{13}$ micro-ohm-centimeters, preferably, from $10^4$ to $10^6$ micro-ohm-centimeters. Marginally useful as element 26 are resistance heating elements, the resistivity of which falls within the transition range between conductors and semiconductors, i.e., from 750—1000 micro-ohm-centimeters. The term "semiconductors", as used in this disclosure, is by definition intended to include such latter materials having a resistivity within the defined transition range (e.g. certain carbon based materials); and which may be suitably fabricated into resistance heating elements useful for the purposes of the invention.

An advantageous feature of the flow cell 10 of this invention is its simplicity in design and fabrication. A preferred flow cell is constructed using a machinable block of glass-filled Teflon® to fabricate the cell body 14. Ordinary drilling methods may be used to provide the passageway 12. Threaded openings 32, 34 are provided at each end of the cell body in communication with passageway 12 for the attachment of chromatographic tube and fittings 36, 38 for passing liquid to be metered through passageway 12. Similar threaded openings 40, 42 are provided in the cell body at positions perpendicular to the passageway 12 for threadably mounting the thermistors 16, 20, respectively.

Due to the relatively larger size of the self-heating thermistor 16, a shallow extension 44 of the bore is provided in the cell body 14 extending below the passageway or to provide a space for the lower tip of the heat emitting surface 18 of the probe 16. The extension 44 permits the heat emitting surface of the self-heating thermistor to be adjustably moved for centering along the axis of fluid flow in the passageway 12 and for alignment with the heat sensing surface 22 of the heat sensing thermistor 20 (which is similarly desirably centered along the axis of the passageway). Where relative dimensions of the thermistors require it, the flow channel can be enlarged at the position of either or both thermistors 16, 20 to produce a coaxially enlarged cavity in which the heat emitting and heat sensing surfaces of the thermistors are placed in a centered alignment with the axis of the passageway. The small size flow cells may be fabricated by mounting thermistors 16, 20 on opposite sides of cell body 14 whereby, through the offset, a closer spacing and thus shorter flow channel length dimension can be obtained using essentially the same flow cell design as illustrated in the drawing.

A preferred arrangement for threadably mounting the thermistors 16, 20 in the cell body 14 employs hollow threaded plugs 46, 48, preferably of plastic, through which the electrical lead wires of the thermistors 16, 20 are passed. Elastic O-rings 50, 52, suitably of Kalrez®, are seated in the threaded openings 40, 42, respectively, and are compressed by the plugs to form a liquid tight seal about the body of each thermistor. A terminal strip (not shown) may be attached, e.g. by machine screws, to the cell body. The lead wires of the thermistors are fastened, e.g., by standard electrical contact screws, to the terminal strip.

Obviously, considerable variation in this simple cell design is possible without changing it functionally.

4

For example, the cell body may be composed of several joined components (as opposed to the unitary block construction shown). In addition, the cell flow channel may be defined using, e.g., a narrow diameter plastic tube (an embodiment described in the teaching of Example 3, below).

A flow restrictor 56 is connected by end fitting 38 to the opening 34 of flow cell 10. The flow restrictor suitably comprises an appropriate length of capillary tubing which restricts fluid flow to produce a back pressure sufficient to avoid microscopic degassing of the metered liquid. The flow restrictor is beneficially used whenever the flow cell is located in a position of back pressure insufficient to avoid detrimental degassing phenomena. Any alternative device such as a common restrictor valve may be substituted for the illustrated capillary tube. The use of the flow restrictor, while optional, produces optimum levels of liquid metering precision in combination with flow cell 10 when used, e.g., to monitor chromatographic column effluent flow (where characteristically low back pressure leads to detrimental degassing of the metered liquid).

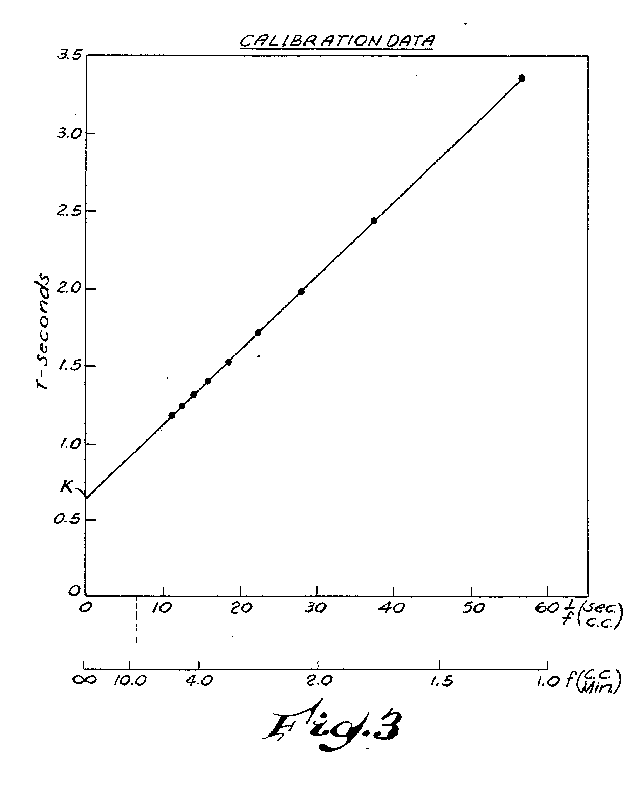

A preferred design of an electronic circuit for operating flow cell 10 is shown in Figure 3 and comprises a circuit 58 for operating thermistor 20 in the heat sensing mode. Circuit 58 comprises a standard voltage divider circuit consisting of a potentiometer 60 and a series resistor 62 divided at juncture (A) from thermistor 20 and series resistors 64 and 65. The total resistance of the circuit is sufficient to produce negligible current pulse surges due to pulse resistance decreases of the thermistor, and hence, non-detrimental self-heating of the heat sensing thermistor. The terminals of a common power source are connected across the voltage divider circuit to provide an energizing voltage within the equilibrium range of thermistor 20. A capacitor 67 stabilizes the voltage at juncture (A) from rapid transients in the positive voltage supply level.

Pulse temperature changes in the metered liquid are electronically sensed in the form of positive voltage pulses which are proportional to a change in the resistance of thermistor 20 with a change in temperature (this circuit being designed for and assuming the use of a negative temperature coefficient heat sensing thermistor). The generated voltage pulses pass through a series-connected current limiting resistor 66 and are amplified by a non-inverting amplifier 68 set for a gain of 50 by the selected resistance ratio of resistors 70, 72 which are connected in a voltage divider circuit mode on the negative feedback of amplifier 68 (in the standard arrangement). A representative pulse wave form of a pre-amplified and amplified voltage pulse is shown in Inset A—B. This pulse is fed to a preferably two stage differentiating amplifier circuit 74, 74a. A first stage 74 of the differentiating circuit comprises a capacitor 76 connected in series with a current limiting resistor 78 and connected to the inverting input of an operational amplifier 80. A feedback resistor 82 returns the input signal to zero following each pulse signal. A capacitor 84 is connected in parallel with resistor 82 to filter high frequency ambient electrical noise.

The pulse signal from amplifier 80 is both inverted and proportional to the time rate of change of this pulse (of inset A—B), the pulse is shown in inset (C). Since the amplified (inset A—B) voltage pulse is proportional to the electrically sensed resistance of the heat sensing thermistor, the pulse produced by amplifier 80 (inset C) is thus equivalently considered as the amplfied time rate of change (or first time derivative) of the resistance change of thermistor 20 with pulse temperature changes in the metered liquid.

The time rate of change pulse signal is conducted to the second stage 74a of the differentiating circuit, which consists of the common elements (with amplifier 80) given like reference numerals. Additionally, the non-inverting input of the second stage amplifier 80a is provided with a zero adjustment biasing circuit 84 which is connected to the referenced power supply outputs in order to trim output of the voltage pulse signal of amplifier 80a. An approximate form of the amplifier 80a output is shown for exemplary purposes in inset D; and is the amplified, electronically derived, second time derivative of the resistance of the heat sensing thermistor 20 with pulse temperature changes in the metered liquid.

The second derivative voltage pulse is fed through a current limiting resistor 86 to the non-inverting input of an operational amplifier 88 which is connected to a capacitor 90 and resistors 92, 94 to produce high gain amplification with additional high frequency filtering. An output signal is thus amplified, e.g., 500 times, and is generated by amplifier 88 and filtered through a low pass filter consisting of a resistor 96 and capacitor 98 connected to the power supply common. The total amplification and derivatization functions produce a square wave voltage pulse which is shown in inset (E).

The voltage pulse of inset (E) is fed to a timer circuit 100 for pulsing the self-heating thermistor, and which includes a current limiting resistor 102, connected to the base of a switching transistor 104, for switching its collector terminal 106 from +15 volts (power supply level) to zero upon arrival of the output of each inset (E) voltage pulse. With each such triggering of the collector terminal 106, a voltage pulse from +15 to zero is produced.

The collector terminal at rest is biased at +15 volts by a voltage divider circuit consisting of a resistor 108 and the switching transistor 104. A second voltage divider 110, 112 produces a highly positive voltage level. The two voltages are placed across a capacitor 114 such that the capacitor is at an elevated voltage on both plates. The switching of the collector terminal voltage rapidly reduces the voltage at capacitor 114, whereby capacitor plate 116 is biased to zero for a brief period of time until the second voltage divider returns to the original voltage level. Consequently, the voltage pulse width generated at the collector terminal is reduced to a voltage spike, which is fed to pin #2 of a timer 118 which is the time cycle reset pin. The timer generates a voltage pulse at pin #3, the duration of which is determined by an external variable resistor 120 in combination with an external capacitor 122 connected to pins #6 and #7. The time interval is adjustably changed in this circuit between the limits of 0.1 to 1.0 second. Pins #1 and #8 are connected to common and the +15 volts power supply, respectively.

An output voltage of fixed duration is fed from pin #3 to a relay 124, which is a double pole, single throw relay which completes the contact between the power supply, a series resistor 126, and the heating thermistor 16. Leads 128, 130 from the relay are connected to an external data collector 132, e.g., a computer, which records each activation event of the self-heating thermistor (in order to derive T). The circuit is initially activated by a manual switch 134. A single 100 ma-rated ±15 volts regulated power supply may be used to operate the entire circuit.

The liquid metering process is initiated by pushbutton activation of a thermal pulse at $R_h$ (the self-heating thermistor). The −4 percent per °C temperature coefficient of the heat sensing thermistor ($R_t$) produces a positive-going voltage at juncture (A) as the warm liquid pulse traverses the sensing zone. This signal is amplified at (B) and connected through capacitor 76 to the inverting input of amplifier 80 of the first stage differential amplifying circuit 74. This circuit yields a voltage pulse at (C) equivalent to the amplified inverted time derivative at (B). Output at (C) is proportional to $dR_t/dt$ and thus slow temperature changes yield essentially zero response in contrast to heat pulses generated in situ by the self-heating thermistor.

A single derivative pulse output returns to baseline too slowly to be optimally prepared for subsequent pulses. Most preferably, therefore, an inverted second derivative is produced at the second stage amplifier 80a resulting in the approximate pulse output form shown in inset (D) and which is proportional to $d^2R_t/dt^2$.

This voltage pulse form is amplified at (E) to drive the transistor triggered timing circuit that applies power to the reed relay. This relay supplies a 30 volt D.C. pulse for a fixed time interval (generally from 0.1 to 1.0 second) to both the pulse counter (i.e., computer), and self-heating thermistor 16. Metering precision is improved through the use of a D.C. pulse form, as opposed to an A.C. voltage pulse to heat thermistor 16. The 2K ohm resistor 126 protects the self-heating thermistor from overheating damage as it undergoes self-heating and its resistance declines. A calculated maximum of 113 mW of power is dissipated at $R_h$ during application of the 30 volts D.C using the standard probe thermistor.

The rate of flow and/or total flow of the metered liquid is electronically computed based on the pulse data collected by the electronic circuit, and by applying the following generic mathematical expression:

$$T = V_c/f + K$$

where:

| | | |
|---|---|---|
| T | = | time period between pulses (e.g., in seconds); |
| $V_c$ | = | calibrated cell volume constant (e.g., in millilitres); |
| f | = | flow rate (e.g., in millilitres per second); and |
| K | = | calibrated time constant (e.g., in seconds). |

The values $V_c$ and K may be determined, e.g., by the exemplary flow cell calibration procedure described in Example 1. T is the pulse period data collected, whereas f is solved to derive the flow rate of the metered liquid. Since the value $V_c/f$ is shown to be characteristically linear with T over a wide flow rate range (see Example 1), the computation of f may be straightforwardly performed electronically; and by a chart recorder or other device displayed visually in any desired form, e.g., to display either or both the instantaneous or averaged flow rate, or to produce based on total pulse count (ΣT), total flow of the metered liquid over any elapsed period of time.

Example 1

This Example describes a preferential calibration method suitable to determine the calibration constants $V_c$ and K. These constants are described with respect to a given flow cell, electronic circuit, and electronic settings. In this study, the flow cell is of a design in which the thermistors 16, 20 are set apart (in center-to-center spacing) approximately 1-1/2 inches (3.8 cm); and are used in conjunction with a flow channel 12 of approximately 1/16 inch (0.159 cm) in diameter. Timer 118 is set to produce 0.8 second pulse heating time; and potentiometer 60 is adjusted to provide a steady state 50 mV positive baseline voltage on which the positive-going voltage pulses of the heat sensing thermistor are imposed. The zero adjust biasing circuit 84 is adjusted to produce zero voltage at (D) during the absence of pulsing.

The apparatus used to calibrate the flow cell consists of a Constametric I pump from LDC Corporation. The pump withdraws liquid (water) from a chromatographic reservoir, and advances it at a preset rate of flow through, sequentially, a pressure gauge, pulse dampening coil, and ultimately the flow cell, using standard 1/16 inch (0.159 cm) O.D. chromatographic tubing to convey the liquid. The discharge from the flow cell is fed through a back pressure-applying capillary coil [3 inches×0.005 inches (7.62 cm×0.127 cm) I.D. capillary] to a collection vessel. A timer is used with a high precision balance to verify liquid flow rates.

The data generated are compiled in Table I, below, wherein, f is the averaged flow rate in mil/minute determined from the precision balance and timer; and T is the averaged time period in seconds between pulsing of the self-heating thermistor as determined from relay 124.

TABLE I

| Experiment Run Number | f ml/min | 1/f (seconds/ml) | T (seconds) |
|---|---|---|---|
| 1 | 5.30 | 11.321 | 1.1826 |
| 2 | 4.78 | 12.552 | 1.2384 |
| 3 | 4.25 | 14.118 | 1.3078 |
| 4 | 3.74 | 16.043 | 1.3987 |
| 5 | 3.20 | 18.750 | 1.5240 |
| 6 | 2.64 | 22.727 | 1.7020 |
| 7 | 2.125 | 28.235 | 1.9729 |
| 8 | 1.61 | 37.267 | 2.4327 |
| 9 | 1.06 | 56.604 | 3.3449 |

Knowing f and T from any two sets of data points, taken from Table I, the equation $T = V_c/f + K$ can be solved to yield the calibration constants $V_c$ and K, using simultaneous equation solving methods to determine the two unknowns. For the given flow metering system described, and using the Table I data, the calibrated cell volume $V_c$ is computed to be 0.048 ml; and the calibration constant K is computed to be 0.630 second. Hence, flow in ml/second is determined according to this flow cell, using the expression

$$T_{sec} = \frac{0.048 \text{ ml}}{f} + 0.630 \text{ sec.}$$

The validity of the above equation is further established by making the plot illustrated as Figure 4. The data points of multiple solutions to the equation at varying $T_{sec}$ and $f_{cc/min}$ produce the straight line (slope of $V_c$) which is projected to intercept the ordinate axis at the value K. Thus, the equation shows that the linear $y = mx + b$ relationship is closely followed. The correlation coefficient for this data is calculated to be 0.99989.

Use of the mathematical basis described above to calibrate the flow cell constants produces exceptional liquid metering precision as shown in Example 2. Nevertheless, liquid flow may be alternatively measured using the flow cell with conventional calibration methods, e.g., by equating total pulse count and pulse frequency data, taken from relay 124, to preknown accumulated liquid volumes or flow rates, as applies. These latter calibration methods can be applied, for example, in order to use the flow cell for metering accurately non-Newtonian fluids.

Example 2

The precision of an electronic flow cell of the same design as used in Example 1 is studied by connecting the cell to an elevated eluent reservoir through 5 feet (1.524 meters) of standard wall 1/16 inch (0.159 cm) O.D. chromatographic tubing. Liquid (water) is fed by gravity feed through the flow cell under a hydrostatic head pressure (total) of 6 inches (15.24 cm) of water. The water is discharged ultimately to a collection vessel through tubing [also 1/16 inch (0.159 cm) O.D.] which has its end immersed in water in the collection vessel. Initial liquid flow is at apprximately 1 ml/minute, and diminishes very slightly during the course of the experiment.

The time value of each pulse T produced at relay 124 is electronically stored in the memory bank of a Microcomputer. At the completion of data collection, the computer electronically generates a linear regression curve and computes the standard deviation of T to be 2.973 milliseconds. The observed standard deviation in the measurement was calculated to be 0.092 percent at the 63 percent confidence level (±1 sigma).

Since it is assumed that actual flow varied randomly (in very small amounts)l due solely to the imperfect characteristics of the testing apparatus, observed precision is thus determined to be no worse than 0.092% in this experiment and quite likely true precision is better.

Example 3

The various flow cells used in this study essentially differ only in respect to calibrated cell volume ($V_c$). Flow cells Nos. 1 and 2 of Table II, below, are constructed using 24 and 12 inches (61 cm and 30.5 cm), respectively, of 0.031 inch (0.79 mm) I.D. tubing which is connected between flow cell blocks each

7

singularly mounting a thermistor. These are the relatively large volume cells. Cell Nos. 3 and 4 are smaller volume cells of the design shown in Figures 1 and 2; flow cell No. 3 being that used in the preceding Example 1. A variable liquid chromatographic metering pump is used to determine the dynamic flow range specific to each cell design, the observed results being reported in Table II.

TABLE II

| Flow cell No. | K in seconds | $V_c/V_g$* in ml | Calculated flow range in ml/min | Observed T average in seconds @ flow range limits |
|---|---|---|---|---|
| 1 | 0.687 | 0.492/0.424 | 9.84+ | 3.69 @ flow minimum |
| 2 | 0.689 | 0.219/0.225 | 4.56—11.0 | 3.63—1.88 |
| 3 | 0.630 | 0.048/0.075 | 1.05—5.30 | 3.34—1.18 |
| 4 | 0.653 | 0.017/0.025 | 0.20—2.17 | 5.72—1.12 |

\* $V_g$=geometric cell volume.

The largest volume cell No. 1 shows a threshold (minimum) flow detection limit at about 10 ml/minute, its upper limit not being tested due to the limitations of the pumping apparatus used in the experiment. This flow cell demonstrates the feasibility of extending the liquid flow metering principles of the invention to the metering of considerably greater than 10 ml/minute flow rates.

Flow cells Nos. 1—3 collectively demonstrate the utility of the invention for metering liquid across essentially the entire practical scope of the sub-10 ml/minute flow range. This experiment is not intended to be construed to represent an optimization study of flow cell dynamic operating range as to any given cell design used in the experiment.

A point to be noted is that the K values determined for the various flow cells 1—4 are not identical. The slight discrepancies between the observed K values can probably be attributed to small differences in the electrical characteristics of the thermistors 16, 20 of each flow cell which, while of identical manufacturing source and part description, would be expected to vary slightly in thermal mass and/or electrical properties.

**Claims**

1. An apparatus for measuring the volume flow rate of a liquid comprising: a body defining a flow-through passageway for conveying the liquid to be measured therethrough; a resistance heating means (16) operably positioned in said passageway and having a heat emitting surface disposed within the liquid in said flow-through passageway for imparting sequential heat pulses to the liquid flowing in said passageway; a heat sensing means (20) operably positioned in said passageway downstream from the resistance heating means and having a heat sensing surface (22) disposed within said flow-through passageway in a fixed spaced relationship with the heat emitting surface of said heating means (16); and means for electronically detecting the period of time (T) between sequential heat pulses, characterized in that said resistance heating means (16) comprises a semi-conductor (26); said heat sensing means (20) comprise a heat sensing semi-conductor (28); said means for electronically detecting said period of time between sequential heat pulses includes a differentiating circuit (74) for generating an electrical signal (C) which in magnitude is proportional to $dR_v/dt$, wherein $dR_v/dt$ is the rate of change of the resistance of said heat sensing semi-conductor (28) with time; said differentiating circuit being connected to operate timer circuit (118), and wherein said timer circuit is activated in response to said electrical signal to apply a sequential electrical current pulse to said heating semiconductor (26).

2. Apparatus according to claim 1, characterized in that said differentiating circuit (74) has its output connected to a further differentiating circuit (74a) for generating an electrical signal (D) having a magnitude corresponding to $d^2R_v/dt^2$ which is the second rate of change of the resistance of said semi-conductor (26) with time.

3. A flow cell as part of the apparatus as defined in one of the foregoing claims 1 or 2, comprising a body defining a flow-through passageway for conveying the liquid to be measured therethrough; a resistance heating means (16) operably positioned in said passageway and having a heat emitting surface disposed within the liquid in said flow-through passageway for imparting sequential heat pulses to the liquid flowing in said passageway; and a heat sensing means (20) operably positioned in said passageway downstream from the resistance heating means and having a heat sensing surface (22) disposed within said flow-through passageway in a fixed spaced relationship with the heating surface of said heating means (16), characterized in that said flow-through passageway has a fixed internal volume within a range

8

# 0 072 044

of 0.01—0.5 ml, said resistance heating means is a semi-conductor (26) and said heat sensing means is a further semi-conductor (28), each of said semi-conductors being encapsulated in an electrical insulator (24, 30).

4. A flow cell according to claim 3, characterized in that said heating means is a thermistor (16) which is adapted to operate in the selfheating mode.

5. A flow cell according to claims 3 or 4, characterized in that the heat sensing semiconductor has a time constant in air of less than about 5 seconds; and the resistance heating semi-conductor has a time constant in air of less than about 22 seconds.

6. A flow cell according to any of claims 3—5, characterized by a flow restrictor means (56) in communication with the passageway for applying backpressure in the liquid to be metered.

7. A flow cell according to any of claims 3—6, characterized in that the dimensions of said flow-through passageway are suitable for measuring volumetric liquid flow rates of less than about 10 ml/min.

8. A flow cell according to any of claims 3—7, characterized in that said heat sensing semiconductor (28) is included in a thermistor.

**Patentansprüche**

1. Vorrichtung zum Messen der Volumenströmungsgeschwindigkeit einer Flüssigkeit mit einem, einen Durchflußweg aufweisenden Körper, um die zu messende Flüssigkeit hindurchzubefördern, im Durchflußweg wirksam angeordnete Widerstandsheizungseinrichtungen (16), die eine in der Flüssigkeit im Durchflußweg angeordnete, Wärme abgebende Oberfläche aufweisen, um auf die durch den Durchflüßweg strömende Flüssigkeit aufeinanderfolgende Wärmeimpulse aufzugeben, im Durchflußweg unterhalb der Widerstandsheizungseinrichtungen wirksam angeordnete, wärmeempfindliche Meßeinrichtungen (20), die eine im Durchflußweg in festem Abstand von der Wärme abgebenden Oberfläche der Heizeinrichtungen (16) angeordnete, wärmeempfindliche Oberfläche (22) aufweisen, Einrichtungen zum elektronischen Bestimmen der Zeitperioden (T) zwischen aufeinander folgenden Wärmeimpulsen, dadurch gekennzeichnet, daß die Widerstandsheizeinrichtungen (16) einen Halbleiter (26) aufweisen, die wärmeempfindlichen Meßeinrichtungen (20) einen wärmeempfindlichen Halbleiter (20) aufweisen, die Einrichtungen zum elektronischen Bestimmen der Zeitperiode (1) zwischen aufeinanderfolgenden Wärmeimpulsen einen Differenzierschaltkreis (74) zum Erzeugen eines elektrischen Signals, dessen Größe proportional $dR_v/dt$ ist, aufweist, wobei $dR_v/dt$ die erste Ableitung des Widerstandes des wärmeempfindlichen Halbleiters (28) gegen die Zeit ist und der Differenzierschaltkreis mit einem diesen auslösenden Zeitschaltglied (118) verbunden ist und das Zeitschaltglied in Abhängigkeit von dem elektrischen Signal aktiviert wird, um eine Folge von elektrischen Stromstößen auf den.Heizhalbleiter (26) aufzugeben.

2. Vorrichtung nach Anspruch 1, dadurch gekennzeichnet, daß der Ausgang des Differenzierschaltkreises (74) mit einem weiteren Differenzierschaltkreis (74a) verbunden ist, zum Erzeugen eines elektrischen Signals (D), dessen Größe $d^2R_v/dt^2$ entspricht, wobei dies die zweite Ableitung des Widerstandes des Halbleiters (26) gegen die Zeit ist.

3. Durchflußzelle als Teil der Vorrichtung nach jedem der vorstehenden Ansprüche 1 oder 2 mit einem, einen Durchflußweg aufweisenden Körper, um die zu messende Flüssigkeit hindurchzubefördern, im Durchflußweg wirksam angeordnete Widerstandsheizeinrichtungen (16), die eine in der Flüssigkeit im Durchflußweg angeordnete Wärme abgebende Oberfläche aufweisen, um auf die durch den Durchflußweg strömende Flüssigkeit aufeinanderfolgende Wärmeimpulse aufzugeben und einer im Durchflußweg unterhalb der Widerstandsheizeinrichtungen wirksam angeordnete, wärmeempfindliche Meßeinrichtung (20), die eine im Durchflußweg im festem Abstand von der Wärme abgebenden Oberfläche der Heizeinrichtungen (16) angeordnete, wärmeempfindliche Oberfläche (22) aufweisen, dadurch gekennzeichnet, daß der Durchflußweg ein festes Innenvolumen in einem Bereich von 0,01 bis 0,5 mm aufweist, die Widerstandsheizeinrichtungen ein Halbleiter (26) sind und die wärmeempfindliche Meßeinrichtung ein weiterer Halbleiter (28) ist, wobei jeder der Halbleiter in einem elektrischen Isolator (24, 30) eingekapselt ist.

4. Durchflußzelle nach Anspruch 3, dadurch gekennzeichnet, daß die Heizeinrichtungen ein sich bei Betrieb selbst erwärmender Thermistor (16) sind.

5. Durchflußzelle nach Ansprüchen 3 oder 4, dadurch gekennzeichnet, daß der wärmeempfindliche Halbleiter in Luft eine Zeitkonstante von kleiner als etwa 5 Sekunden und der Widerstandsheizungshalbleiter in Luft eine Zeitkonstante von kleiner als etwa 22 Sekunden aufweist.

6. Durchflußzelle nach jedem der Ansprüche 3 bis 5, gekennzeichnet durch eine Strömungsdrosseleinrichtung (56) in Verbindung mit dem Durchflußweg zum Erzeugen eines Rückstaus in der zu messenden Flüssigkeit.

7. Durchflußzelle nach jedem der Ansprüche 3 bis 6, dadurch gekennzeichnet, daß die Abmessungen des Durchflußweges geeignet sind, um Volumenströmungsgeschwindigkeiten von kleiner als etwa 10 ml/Minute zu messen.

8. Durchflußzelle nach jedem der Ansprüche 3 bis 7, dadurch gekennzeichnet, daß der wärmeempfindliche Halbleiter (28) in einem Thermistor enthalten ist.

9

**Revendications**

1. Appareil pour mesurer le débit volumique d'un liquide, comprenant: un corps délimitant un passage de circulation pour que le liquide a mesurer passe à travers lui; un moyen de chauffage par résistance (16) disposé dans ledit passage de manière a pouvoir fonctionner et présentant une surface d'émission de chaleur disposée à l'intérieur du liquide situé dans ledit passage de circulation afin d'impartir des impulsions thermiques en séquence au liquide s'écoulant dans ledit passage; un moyen de détection de température (20) disposé dans ledit passage, de manière à pouvoir fonctionner, en aval du moyen de chauffage par résistance et présentant une surface de détection de température (22) disposée à l'intérieur dudit passage de circulation suivant une disposition relative espacée fixe par rapport à la surface d'émission thermique du moyen de chauffage (16); et un moyen pour détecter par voie électronique l'intervalle de temps (T) séparant des impulsions thermiques en séquence, caractérisé en ce que ledit moyen de chauffage par résistance (16) comprend un semi-conducteur (26); ledit moyen de détection de température (20) comprend un semi-conducteur de dètection de température (28); ledit moyen permettant de détecter par voie électronique ledit intervalle de temps séparant des impulsions thermiques en séquence comprend un circuit dérivateur (74) permettant de produire un signal électrique (C) dont l'amplitude est proportionnelle à $dR_t/dt$, $dR_t/dt$ étant la dérivée de la resistance dudit semi-conducteur de détection de température (28) par rapport au temps; ledit circuit dérivateur étant connecté de façon à faire fonctionner un circuit d'horloge (118), tandis que ledit circuit d'horloge est actionné sous l'effet dudit signal électrique de façon à appliquer une impulsion de courant électrique de séquence audit semi-conducteur de chauffage (26).

2. Appareil selon la revendication 1, caractérisé en ce que ledit circuit dérivateur (74) a sa sortie connectée à un autre circuit dérivateur (74a) permettant de produire un signal électrique (D) présentant une amplitude correspondant a $d^2R_t/dt^2$ qui est la dérivée seconde de la résistance dudit semi-conducteur (26) par rapport au temps.

3. Cellule de débit, en tant que partie de l'appareil défini dans l'une des revendications précédentes 1 ou 2, comprenant: un corps délimitant un passage de circulation pour que le liquide à mesurer passe à travers lui; un moyen de chauffage par résistance (16) disposé dans ledit passage de manière à pouvoir fonctionner et présentant une surface d'émission de chaleur disposée à l'intérieur du liquide situé dans ledit passage de circulation afin d'impartir des impulsions thermiques en sequence au liquide s'écoulant dans ledit passage; et un moyen de détection de température (20) disposé dans ledit passage, de manière à pouvoir fonctionner, en aval du moyen de chauffage par résistance et présentant une surface de détection de température (22) disposée à l'intérieur dudit passage de circulation suivant une disposition relative espacée fixe par rapport à la surface chauffante dudit moyen de chauffage (16), caractérisée en ce que ledit passage de circulation présente un volume interne fixe dans une gamme de 0,01—0,5 ml, ledit moyen de chauffage par résistance est un semi-conducteur (26) et ledit moyen de détection de température est un autre semi-conducteur (28), chacun desdits semi-conducteurs étant enrobé dans un isolant électrique (24, 30).

4. Cellule de débit selon la revendication 3, caractérisée en ce que ledit moyen de chauffage est une thermistance (16) qui est agencée de façon à fonctionner dans le mode d'autochauffage.

5. Cellule de débit selon les revendications 3 ou 4 caractérisée en ce que le semi-conducteur de détection de température présente une constante de temps dans l'air inférieure à environ 5 secondes: et le semi-conducteur de chauffage par résistance présente une constante de temps dans l'air inférieure à environ 22 secondes.

6. Cellule de débit selon l'une quelconque des revendications 3—5, caractérisée par un moyen de restriction de debit (56) communiquant avec le passage dans le but d'appliquer une contre-pression dans le liquide a mesurer.

7. Cellule de débit selon l'une quelconque des revendications 3—6, caractérisée en ce que les dimensions dudit passage de circulation conviennent pour mesurer des débits volumétriques de liquide inférieurs à environ 10 ml/mn.

8. Cellule de débit selon l'une quelconque des revendications 3—7, caractérisée en ce que ledit semiconducteur de détection de température (28) est inclus dans une thermistance.

# 0 072 044

*Fig. 1*

Fig.2

CALIBRATION DATA

Fig.3